# FASCICULE DE BREVET EUROPEEN

(11) **EP 1 439 320 B1**
(45) Date de publication et mention de la délivrance du brevet: **07.12.2005**
(21) Numéro de dépôt: 04290091.0
(22) Date de dépôt: 14.01.2004
(51) Int. Cl.: F16F 9/54, B60G 13/00, B60G 15/06

(54) **Support anti-vibratoire**
Schwingungsisolierendes Lager
Vibration isolating support

(30) Priorité: 16.01.2003 FR 0300446
(43) Date de publication de la demande: 21.07.2004
(73) Titulaire: HUTCHINSON, 75008 Paris (FR)
(72) Inventeur: Bouhier, Bernard, 41140 Noyers sur Cher (FR); Carobolante, Pascal, 18100 St. Hilaire de Court (FR); Perigault, Christian, 36100 Les Bordes (FR); Colas, Patrice, 18100 Vierzon (FR)
(74) Mandataire: Burbaud, Eric

(56) Documents cités:
- EP-A- 0 282 144
- EP-A- 0 590 317
- FR-A- 2 726 789
- FR-A- 2 772 307
- US-A- 4 958 849
- US-A- 5 248 134
- US-A- 5 261 650

## Description

La présente invention se rapporte à un support anti-vibratoire destiné notamment mais non exclusivement aux véhicules automobiles.

La présente invention se rapporte plus particulièrement à un support anti-vibratoire comprenant :
- une armature intérieure s'étendant selon un axe longitudinal ;
- un corps annulaire en élastomère solidaire de l'armature intérieure qui entoure l'armature intérieure autour de l'axe longitudinal et qui est délimité radialement, par rapport à l'axe longitudinal, par une surface extérieure annulaire et longitudinalement par une première face d'extrémité et une deuxième face d'extrémité ; et
- au moins un insert métallique s'étendant dans ledit corps à proximité de ladite surface extérieure entre une première extrémité et une deuxième extrémité, ladite première extrémité étant agencée à proximité de la première face, ledit support étant destiné à recevoir un premier et un deuxième éléments rigides qui sont respectivement fixés à ladite armature intérieure et à ladite surface extérieure et qui transmettent au dit corps des efforts de sens opposés selon l'axe longitudinal. Un tel support est décrit dans le US-A-5 261 650.

Traditionnellement, pour l'assemblage du premier élément rigide qui est par exemple un amortisseur de véhicule, avec le deuxième élément rigide qui est par exemple une coque de véhicule, on effectue les opérations suivantes :
- on fixe le premier élément rigide sur l'armature intérieure du support ;
- on place l'ensemble ainsi formé contre un premier côté d'une ouverture traversant le deuxième élément rigide ; et
- tout en maintenant le support contre le premier côté de l'ouverture, on fixe de l'autre côté de l'ouverture des moyens de retenue pour solidariser le support avec le deuxième élément rigide. Par exemple, dans le cas d'un véhicule, l'ensemble amortisseur/support, avec éventuellement un ressort pour former la jambe de force d'une suspension, est inséré placé du côté inférieur de la coque du véhicule contre une ouverture, puis on fixe le support en montant une coupelle du côté supérieur de la coque par vissage.

Ce mode de montage présente des inconvénients car il nécessite notamment de maintenir le support contre l'ouverture de la coque pendant la fixation de la coupelle. De plus, le côté supérieur de la coque est généralement difficile d'accès sur une chaîne d'assemblage. En effet, la coque du véhicule est située à une hauteur importante pour permettre le passage sous celle-ci d'un train roulant équipé de ses jambes de force. Il faut donc prévoir un outillage pour soit soulever le train roulant, soit abaisser la coque et maintenir le train roulant contre la face inférieure de la coque pendant le temps nécessaire à un opérateur pour fixer les moyens de retenue par la face supérieure de la coque.

Le but de la présente invention est de remédier à ces inconvénients en proposant un support anti-vibratoire qui permet de simplifier le montage de deux éléments rigides, et notamment le montage d'un amortisseur ou d'un ensemble complet formant la jambe de force d'une suspension avec la coque d'un véhicule.

A cet effet, l'invention a pour objet un support anti-vibratoire du type précité caractérisé en ce que l'insert forme une pièce annulaire élastique qui présente des fentes s'étendant depuis la première extrémité vers la deuxième extrémité, lesdites fentes définissant au moins deux languettes qui s'étendent le long de la surface extérieure entre une base et un sommet, et qui sont susceptibles d'être déformées élastiquement selon une direction radiale orientée vers l'axe longitudinal de manière à ce que la première face présente un encombrement radial réduit.

Grâce à l'insert métallique élastiquement déformable, le support peut être comprimé et inséré dans le deuxième élément rigide, une fois inséré on obtient une certaine fixation du support sur le deuxième élément rigide sous l'action de l'effort radialement extérieur exercé contre la paroi de l'ouverture du deuxième élément rigide par la surface extérieure du support. Cette fixation peut être complétée ultérieurement par d'autres moyens de retenue. Toutefois, cette fixation peut être suffisamment ferme pour ne pas nécessiter d'autres moyens de retenue, notamment en ayant recours, dans des formes de réalisation préférées de l'invention, à l'une ou à l'autre des dispositions suivantes :
- la base des languettes est plus large que le sommet desdites languettes ;
- la surface extérieure du corps en élastomère présente au moins un relief qui s'étend radialement et qui est situé longitudinalement entre la première face du corps et la base des languettes ;
- le relief est formé par un premier rebord annulaire qui s'étend radialement vers l'extérieur et qui est adjacent à la première face du corps ;
- le sommet des languettes présente une aile s'étendant radialement vers l'extérieur dans le premier rebord ;
- la première face du corps présente une portion périphérique qui est un tronc de cône d'axe colinéaire à l'axe longitudinal avec une base agencée du côté de la deuxième face du corps ;
- un deuxième rebord annulaire s'étend radialement vers l'extérieur depuis la surface extérieure du corps, ledit deuxième rebord étant adjacent à la deuxième face du corps ;
- l'insert comprend un anneau s'étendant radialement depuis un bord intérieur agencé dans le corps, jusqu'à un bord extérieur agencé dans le deuxième rebord ;
- la base des languettes est solidaire du bord intérieur de l'anneau ;
- la somme des longueurs des bases des languettes est au moins égale à 80 pour cent de la périphérie du bord intérieur de l'anneau ;
- les languettes sont régulièrement réparties sur l'anneau ;
- la surface extérieure du corps est, en dehors de tout relief, un tronc de cône d'axe colinéaire à l'axe longitudinal avec un sommet agencé du côté de la première face, qui présente un premier diamètre et une base qui présente un deuxième diamètre supérieur au premier diamètre ;
- une coupelle de rebond, présentant un diamètre extérieur au plus égal au premier diamètre du tronc de cône de la surface extérieure, est montée contre et coaxialement à l'armature intérieure du côté de la première face du corps de manière à présenter une face concave orientée vers l'extérieur ;
- une butée, présentant un diamètre maximum inférieur au premier diamètre du tronc de cône de la surface extérieure et un sommet de diamètre inférieur audit diamètre maximum, s'étend selon l'axe longitudinal depuis la face concave de la coupelle de rebond ;
- une coupelle de choc est montée contre et coaxialement à l'armature intérieure du côté de la deuxième face du corps de manière à présenter une face concave orientée vers l'extérieur ;
- un insert métallique supplémentaire comprend une extrémité agencée dans le corps; une première portion s'étendant longitudinalement à travers la deuxième face dudit corps et une deuxième portion s'étendant radialement qui présente une face extérieure garnie d'élastomère.

Par ailleurs, l'invention se rapporte à un véhicule comportant un support anti-vibratoire tel que défini précédemment, un amortisseur et une coque, dans lequel l'amortisseur comporte une tige qui présente une extrémité solidaire de l'armature intérieure dudit support et qui s'étend selon l'axe longitudinal de ladite armature depuis la deuxième face du corps en élastomère, et en ce que la coque comporte une ouverture présentant une paroi annulaire de forme complémentaire à la surface extérieure dudit corps, ledit support étant inséré dans ladite ouverture de la coque.

L'invention se rapporte également à un procédé de montage d'un amortisseur comportant une tige qui présente une extrémité, sur une coque de véhicule comportant une ouverture qui présente une paroi annulaire s'étendant entre un côté inférieur et un côté supérieur de ladite coque à l'aide d'un support anti-vibratoire tel que défini précédemment dans lequel ladite paroi annulaire de l'ouverture présente une forme complémentaire à la surface extérieure du corps en élastomère et comprenant les étapes suivantes :
- on fixe l'extrémité de la tige de l'amortisseur sur l'armature intérieure du support de manière à ce que la deuxième face du support soit orientée vers l'amortisseur ;
- on applique la première face du support contre le côté inférieur de l'ouverture de la coque de manière à comprimer radialement ladite première face du corps vers l'axe longitudinal ; et
- on insère le corps en élastomère dans l'ouverture de la coque jusqu'à ce que la surface extérieure du corps en élastomère épouse complètement la paroi annulaire de l'ouverture sous l'action des languettes élastiques de l'insert.

D'autres caractéristiques et avantages de l'invention apparaîtront au cours de la description qui va suivre donnée à titre d'exemple non limitatif en référence aux dessins annexés dans lesquels :
- la figure 1 est une vue en coupe longitudinale d'un support antivibratoire selon l'invention ;
- la figure 2 est une vue en perspective d'un insert métallique du support représenté à la figure 1 ;
- la figure 3 est une vue en perspective d'un véhicule comprenant une jambe de force et une coque reliées par le support représenté à la figure 1 ;
- la figure 4 et une vue simplifiée d'une coupe partielle selon la ligne IV-IV de la figure 3.

Sur les différentes figures, on a conservé les mêmes références pour désigner des éléments identiques ou similaires.

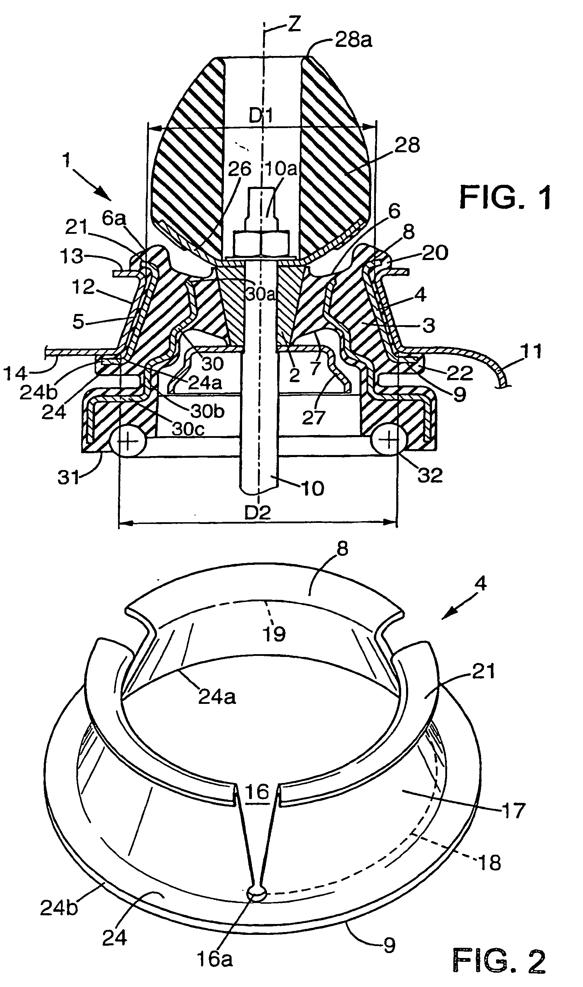

A la figure 1 est représenté un support anti-vibratoire 1 qui comprend une armature intérieure 2 s'étendant selon un axe longitudinal Z, un corps en élastomère 3 et un insert métallique 4 agencé dans le corps 3.

Le corps 3 entoure l'armature intérieure 2 et est solidaire de celle-ci par adhésion. Le corps 3 est délimité radialement par rapport à l'axe longitudinal Z par une surface extérieure annulaire 5 et longitudinalement par une première face d'extrémité 6 et une deuxième face d'extrémité 7.

L'insert métallique 4 s'étend dans le corps 3 à proximité de la surface extérieure 5 entre une première extrémité 8 agencée à proximité de la première face 6 du corps, et une deuxième extrémité 9 qui dans le mode de réalisation représenté est située à proximité de la deuxième face 7 du corps.

L'extrémité 10a d'une tige 10 d'un amortisseur est fixée à l'armature intérieure 2 à l'aide d'un boulon de manière à ce que la deuxième face 7 du corps 3 soit orienté vers l'amortisseur qui n'est pas représenté sur la figure 1.

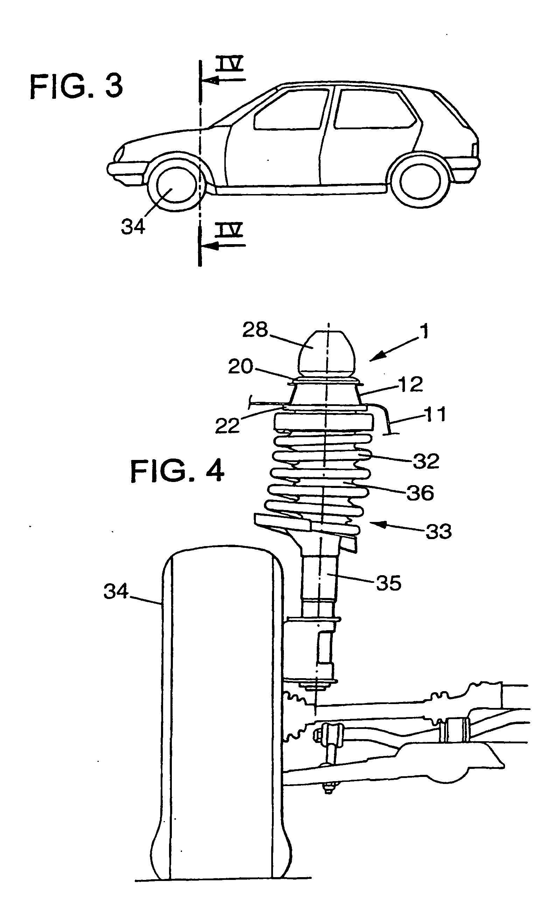

La surface extérieure 5 du corps en élastomère est insérée dans une ouverture qui présente une paroi annulaire 12 s'étendant entre un côté supérieur 13 et un côté inférieur 14 d'un élément rigide 11. Dans le mode de réalisation représenté, l'élément rigide 11 est une coque d'un véhicule automobile représenté à la figure 3.

Comme cela apparaît sur la figure 4, le support 1 peut recevoir également l'extrémité supérieure d'un ressort hélicoïdal 32 entourant un amortisseur 35 dont la tige est protégée par un soufflet 36. L'ensemble ressort/amortisseur forme une jambe de force 33 pour la suspension d'une roue 34. La coque 11 repose sur la jambe de force 33 par l'intermédiaire du support 1 pour limiter la transmission de vibration de la suspension vers la coque.

Le corps en élastomère 3 doit être dimensionné pour supporter le poids du véhicule transmis par la paroi 12 de l'ouverture et les réactions de l'amortisseur qui sont transmises par la tige 10 selon la direction de l'axe Z. Mais il aussi soumis à des efforts perpendiculaires à l'axe Z.

Selon l'invention et comme on le voit mieux sur la figure 2, l'insert 4 forme une pièce annulaire élastique qui présente des fentes 16 s'étendant depuis la première extrémité 8 vers la deuxième extrémité 9. Les fentes 16 définissent trois languettes 17 qui s'étendent le long de la surface extérieure 5 entre une base 18 et un sommet 19 représentés en traits discontinus sur la figure 2. Toutefois, le nombre de languettes pourrait être plus important ou réduit à deux.

Les languettes 17 sont élastiques et peuvent être déformées selon une direction radiale orientée vers l'axe longitudinal Z.

Grâce à cette disposition, la première face 6 du support et au moins une partie de la surface extérieure 5 peuvent être comprimées radialement vers l'axe longitudinal Z de manière à présenter un encombrement radial réduit qui permet d'insérer le support 1 dans l'ouverture de la coque 11 délimitée par la paroi annulaire 12. Lorsque le support est en place dans l'ouverture, les languettes 17 exercent une pression radiale vers l'extérieur contre la paroi annulaire 12, ce qui permet de maintenir le support dans l'ouverture.

Pour permettre une bonne compression des languettes vers l'axe longitudinal, la base 18 des languettes est plus large que leur sommet 19.

L'insert annulaire 4 est formé d'une seule pièce continue dans le mode de réalisation représenté. Mais il est envisageable de réaliser l'insert à l'aide de plusieurs éléments attachés entre eux, par exemple par agrafage, pour former une pièce annulaire.

De préférence, la surface extérieure 5 du corps en élastomère présente un relief qui s'étend radialement et qui est situé longitudinalement par rapport à l'axe Z entre la face supérieure 6 du corps et la base 18 des languettes, pour assurer une bonne fixation du support sur la coque.

Dans le mode de réalisation représenté, le relief est formé par un premier rebord annulaire 20 qui s'étend radialement vers l'extérieur et qui est adjacent à la première face 6 du corps. Le sommet 8 des languettes présente une aile 21 qui s'étend radialement vers l'extérieur dans le premier rebord 20.

Grâce à l'élasticité des languettes 17, le premier rebord 20 peut être comprimé radialement vers l'axe longitudinal Z lors de l'insertion du support dans l'ouverture de la coque 11. Lorsque le support est totalement inséré, le premier rebord s'écarte radialement de l'axe Z sous l'action des languettes et vient prendre appui sur le côté supérieur 13 de l'ouverture de la coque. Ainsi, le support ne peut plus ressortir de l'ouverture par le côté inférieur 14.

La première face 6 du corps présente une portion périphérique 6a, correspondant au côté du premier rebord 20 situé vers le haut sur la figure 1, qui est un tronc de cône d'axe colinéaire à l'axe longitudinal Z avec une base agencée du côté de la deuxième face 7 du corps. La portion périphérique 6a ainsi réalisée facilite la compression radiale de la première face 6.

Comme on peut le voir sur la figure 1, le corps 3 présente un deuxième rebord annulaire 22 qui s'étend radialement vers l'extérieur depuis la surface extérieure 5 et qui est adjacent à la deuxième face 7 du corps.

L'insert 4 comprend un anneau 24 s'étendant radialement depuis un bord intérieur 24a jusqu'à un bord extérieur 24b. Les diamètres des bords intérieur et extérieur sont choisis de manière à ce que le bord extérieur 24b soit agencé dans le deuxième rebord 22 et que le bord intérieur 24 soit situé dans le corps 3.

L'anneau 24 forme la partie annulaire de l'insert dont la symétrie de révolution autour de l'axe longitudinal Z, ainsi que la symétrie de révolution de la surface extérieure 5 du corps en élastomère, permet au support d'absorber des efforts dans toutes les directions perpendiculaire à l'axe Z de manière satisfaisante.

La base 18 des languettes est solidaire du bord intérieur 24a de l'anneau de manière à ce que les languettes qui sont rectilignes, s'étendent dans le corps 3 parallèlement à la surface extérieure 5 jusqu'à leur sommet 8. Toutefois, les fentes 16 s'étendent jusque dans l'anneau 24 de manière à ce que la base 18 des languettes soit située entre le bord intérieur 24a et le bord extérieur 24b de l'anneau pour augmenter l'élasticité des languettes.

Les bases 18 des trois languettes sont régulièrement réparties sur l'anneau et séparées par des ouvertures cylindriques 16a pratiquées à l'extrémité des fentes 16. Toutefois, le diamètre des ouvertures 16a est relativement faible pour obtenir des bases 18 de longueur importante, afin d'obtenir une force de rappel élastique importante des languettes lorsqu'elles sont comprimées vers l'axe central Z. La somme des longueurs des bases 18 des languettes est comprise de préférence entre 80 et 99 % de la périphérie du bord intérieur 24a pour que la surface extérieure 5 exerce une pression importante contre la paroi 12 de l'ouverture.

La surface extérieure 5 est de manière globale, c'est-à-dire en dehors des reliefs formés par le premier rebord 20 et le deuxième rebord 22, un tronc de cône d'axe colinéaire à l'axe longitudinal Z. Le sommet de ce tronc de cône est situé du côté de la première face 6 du corps et présente un premier diamètre D1, tandis que la base est située du côté de la deuxième face 7 et présente un deuxième diamètre D2 supérieur au premier diamètre D1.

Le deuxième rebord 22 et la forme tronconique de la surface extérieure 5 permettent de bloquer de manière sûre le support dans sa direction d'insertion lorsqu'il est monté dans l'ouverture de la coque 11. De plus, avec le premier rebord 20 qui bloque le support dans la direction opposée, on obtient une fixation très forte du support sur la coque 11 et il n'est pas nécessaire de recourir à des moyens de fixation supplémentaires.

Toutefois, la forme tronconique n'est pas absolument nécessaire pour obtenir un tel blocage, par exemple la surface extérieure peut être globalement cylindrique et comporter un relief saillant ou creux qui coopère avec un relief complémentaire formé dans la paroi 12 de l'ouverture de la coque.

Pour éviter toute déformation excessive du corps en élastomère selon l'axe longitudinal Z, le support comprend une coupelle de rebond 26 et une coupelle de choc 27 disposées concentriquement à l'axe longitudinal Z et agencées contre l'armature intérieure 2 respectivement du côté de la première face 6 et du côté de la deuxième face 7. Lorsque le corps en élastomère subit une déformation importante selon l'axe Z, l'une des coupelles vient en appui contre la face correspondante du corps et limite le cisaillement de l'élastomère.

Toutefois, le diamètre maximum de la coupelle de rebond 26 doit être inférieur au premier diamètre D1 de la surface extérieure 5 pour permettre son insertion à travers l'ouverture de la coque 11 qui présente une paroi 12 de forme complémentaire à la surface extérieure 5.

La coupelle de rebond 26 peut comporter une butée 28 qui est destinée à venir en contact avec un élément de la coque, non représenté, pour limiter le débattement de l'armature intérieure 2 lorsque la roue 34 transmet un effort très important au support. La butée 28 peut être en élastomère comme le corps 3 ou tout autre matière adaptée pour supporter un choc.

La butée 28, qui s'étend selon l'axe Z, doit présenter un diamètre maximum inférieur au premier diamètre D1 pour être passée à travers l'ouverture de la coque.

Avantageusement, la butée 28 présente un sommet 28a de diamètre inférieur à son diamètre maximum, ce qui permet de guider et de centrer le support avant son insertion dans l'ouverture. Dans le mode de réalisation représenté, la butée 28 a une forme d'ogive qui facilite particulièrement le montage.

On notera que le support peut comprendre un insert supplémentaire 30 qui comprend une extrémité 30a agencée dans le corps 3, une première portion 30b s'étend longitudinalement à travers la deuxième face 7 du corps et une deuxième portion 30c s'étendant radialement sous la face 7. La deuxième portion 30c présente une face extérieure 31 réalisée en élastomère et qui forme une surface d'appui pour le ressort 32 de la jambe de force 33 de la suspension.

Grâce à ces dispositions, la jambe de force 33 de la suspension comprenant le ressort 32 et l'amortisseur 35 forme un ensemble unitaire avec le support 1 qui peut être monté sur la coque 11 du véhicule par simple insertion du support dans l'ouverture de la coque jusqu'à obtenir un encliquetage du premier rebord 20 contre la face supérieure 13 de l'ouverture de la coque.

Pour le montage de l'amortisseur 35 et éventuellement du ressort 32 s'il s'agit d'une suspension de type MacPherson, on procède de la manière suivante :
- on monte par vissage l'extrémité 10a de la tige de l'amortisseur 35 sur l'armature intérieure 2 du support de manière à ce que la deuxième face 7 soit orientée vers l'amortisseur et éventuellement en intercalant les coupelles de rebond 26 et de choc 27 si celles-ci ne sont pas solidaires de l'armature intérieure ;
- on applique la première face 6 du support contre le côté inférieur 14 de l'ouverture de la coque 11, ce qui comprime radialement la première face 6 et l'insert métallique 4 vers l'axe longitudinal Z ; et
- on insert le corps en élastomère 3 dans l'ouverture jusqu'à ce que la surface extérieure 5 du corps épouse complètement la paroi 12 de l'ouverture sous l'action des languettes élastiques 17 de l'insert.

Si, comme dans le mode de réalisation représenté, la paroi annulaire 5 présente une forme tronconique et un premier rebord 20 qui s'encliquette sur le côté supérieur 13, il n'est pas nécessaire d'utiliser d'autres moyens de retenue pour assurer une bonne fixation de la jambe de force 33 sur la coque 11 du véhicule.

On notera toutefois que l'on peut obtenir un encliquetage du support sur la paroi 12 de l'ouverture avec un relief autre que le rebord 20, comme par exemple un relief saillant ou creux situé longitudinalement au niveau de la partie médiane des languettes 17 de l'insert 4, la paroi 12 de l'ouverture devant bien entendu avoir une forme complémentaire à ces reliefs.

Le support réalisé selon l'invention permet de monter facilement, par encliquetage, une jambe de force sur une coque de véhicule. On notera que ce montage ne nécessite pas un accès au côté supérieur de la coque.

## Revendications

1. Support anti-vibratoire comprenant :
- une armature intérieure (2) s'étendant selon un axe longitudinal (Z) ;
- un corps annulaire (3) en élastomère solidaire de l'armature intérieure (2) qui entoure l'armature intérieure autour de l'axe longitudinal (Z) et qui est délimité radialement, par rapport à l'axe longitudinal (Z), par une surface extérieure annulaire (5) et longitudinalement par une première face d'extrémité (6) et une deuxième face d'extrémité (7) ; et
- au moins un insert métallique (4) s'étendant dans ledit corps à proximité de ladite surface extérieure (5) entre une première extrémité (8) et une deuxième extrémité (9), ladite première extrémité étant agencée à proximité de la première face (6), ledit support étant destiné à recevoir un premier et un deuxième éléments rigides (10,11) fixés respectivement à ladite armature intérieure (2) et à ladite surface extérieure (5) et qui transmettent au dit corps des efforts de sens opposés selon l'axe longitudinal (Z), **caractérisé en ce que** l'insert (4) forme une pièce annulaire élastique qui présente des fentes (16) s'étendant depuis la première extrémité (8) vers la deuxième extrémité (9), lesdites fentes définissant au moins deux languettes (17) qui s'étendent le long de la surface extérieure (5) du corps annulaire entre une base (18) et un sommet (19), et qui sont susceptibles d'être déformées élastiquement selon une direction radiale orientée vers l'axe longitudinal (Z) de manière à ce que la première face (6) présente un encombrement radial réduit.

2. Support anti-vibratoire selon la revendication 1, dans lequel la base (18) des languettes (17) est plus large que le sommet (19) desdites languettes.

3. Support anti-vibratoire selon la revendication 1 ou 2, dans lequel la surface extérieure (5) du corps en élastomère présente au moins un relief (20) qui s'étend radialement et qui est situé longitudinalement entre la première face (6) du corps et la base (18) des languettes.

4. Support anti-vibratoire selon la revendication 3, dans lequel le relief est formé par un premier rebord annulaire (20) qui s'étend radialement vers l'extérieur et qui est adjacent à la première face (6) du corps.

5. Support anti-vibratoire selon la revendication 4, dans lequel le sommet (19) des languettes présente une aile (21) s'étendant radialement vers l'extérieur dans le premier rebord (20).

6. Support anti-vibratoire selon l'une quelconque des revendications 1 à 5, dans lequel la première face (6) du corps présente une portion périphérique (6a) qui est un tronc de cône d'axe colinéaire à l'axe longitudinal (Z) avec une base agencée du côté de la deuxième face (7) du corps.

7. Support anti-vibratoire selon l'une quelconque des revendications 1 à 6, dans lequel un deuxième rebord annulaire (22) s'étend radialement vers l'extérieur depuis la surface extérieure (5) du corps, ledit deuxième rebord étant adjacent à la deuxième face (7) du corps.

8. Support anti-vibratoire selon la revendication 7, dans lequel l'insert (4) comprend un anneau (24) s'étendant radialement depuis un bord intérieur (24a) agencé dans le corps (3), jusqu'à un bord extérieur (24b) agencé dans le deuxième rebord (22).

9. Support anti-vibratoire selon la revendication 8, dans lequel la base (18) des languettes est solidaire du bord intérieur (24a) de l'anneau.

10. Support anti-vibratoire selon la revendication 9, dans lequel la somme des longueurs des bases (18) des languettes est au moins égale à 80 pour cent de la périphérie du bord intérieur (24a) de l'anneau.

11. Support anti-vibratoire selon l'une quelconque des revendications 8 à 10, dans lequel les languettes (17) sont régulièrement réparties sur l'anneau (24).

12. Support anti-vibratoire selon l'une quelconque des revendications 3 à 11, dans lequel la surface extérieure (5) du corps est, en dehors de tout relief, un tronc de cône d'axe colinéaire à l'axe longitudinal (Z) avec un sommet agencé du côté de la première face (6), qui présente un premier diamètre (D1) et une base qui présente un deuxième diamètre (D2) supérieur au premier diamètre (D1).

13. Support anti-vibratoire selon la revendication 12, dans lequel une coupelle de rebond (26), présentant un diamètre extérieur au plus égal au premier diamètre (D1) du tronc de cône de la surface extérieure (5), est montée contre et coaxialement à l'armature intérieure (2) du côté de la première face (6) du corps de manière à présenter une face concave orientée vers l'extérieur.

14. Support anti-vibratoire selon la revendication 13, dans lequel une butée (28), présentant un diamètre maximum inférieur au premier diamètre (D1) du tronc de cône de la surface extérieure (5) et un sommet (28a) de diamètre inférieur audit diamètre maximum, s'étend selon à l'axe longitudinal (Z) depuis la face concave de la coupelle de rebond (26).

15. Support anti-vibratoire selon l'une quelconque des revendications 1 à 14, dans lequel une coupelle de choc (27) est montée contre et coaxialement à l'armature intérieure (2) du côté de la deuxième face (7) du corps de manière à présenter une face concave orientée vers l'extérieur.

16. Support anti-vibratoire selon l'une quelconque des revendications 1 à 15, dans lequel un insert métallique supplémentaire (30) comprend une extrémité (30a) agencée dans le corps (3), une première portion (30b) s'étendant longitudinalement à travers la deuxième face (7) dudit corps et une deuxième portion (30c) s'étendant radialement qui présente une face extérieure (31) garnie d'élastomère.

17. Véhicule comportant un support anti-vibratoire selon l'une quelconque des revendication 1 à 16, un amortisseur (35) et une coque (11), dans lequel l'amortisseur comporte une tige (10) qui présente une extrémité (10a) solidaire de l'armature intérieure (2) dudit support et qui s'étend selon l'axe longitudinal (Z) de ladite armature depuis la deuxième face (7) du corps en élastomère, et en ce que la coque (11) comporte une ouverture présentant une paroi annulaire (12) de forme complémentaire à la surface extérieure (5) dudit corps, ledit support étant inséré dans ladite ouverture de la coque.

18. Procédé de montage d'un amortisseur (35) comportant une tige (10) qui présente une extrémité (10a), sur une coque (11) de véhicule comportant une ouverture qui présente une paroi annulaire (12) s'étendant entre un côté inférieur (14) et un côté supérieur (13) de ladite coque, à l'aide d'un support anti-vibratoire selon l'une quelconque des revendications 1 à 16, dans lequel ladite paroi annulaire (12) de l'ouverture présente une forme complémentaire à la surface extérieure (5) du corps en élastomère et comprenant les étapes suivantes :
- on monte fixe l'extrémité (10a) de la tige de l'amortisseur sur l'armature intérieure (2) du support de manière à ce que la deuxième face (7) du support soit orientée vers l'amortisseur ;
- on applique la première face (6) du support contre le côté inférieur (14) de l'ouverture de la coque de manière à comprimer radialement ladite première face du corps vers l'axe longitudinal (Z) ; et
- on insère le corps (3) en élastomère dans l'ouverture de la coque jusqu'à ce que la surface extérieure (5) du corps en élastomère épouse complètement la paroi annulaire (12) de l'ouverture sous l'action des languettes élastiques (17) de l'insert (4).

## Patentansprüche

1. Schwingungsdämpfendes Lager mit:
- einer Innenarmierung (2), die sich entlang einer Längsachse (Z) erstreckt;
- einem mit der Innenarmierung (2) fest verbundenen, ringförmigen Körper (3) aus Elastomer, der die Innenarmierung um die Längsachse (Z) herum umgibt und bezüglich der Längsachse (Z) radial von einer ringförmigen Außenseite (5) und der Länge nach von einer ersten Stirnfläche (6) und einer zweiten Stirnfläche (7) begrenzt wird; und
- wenigstens einem Metalleinsatz (4), der sich in dem Körper in der Nähe der Außenseite (5) zwischen einem ersten Ende (8) und einem zweiten Ende (9) erstreckt, wobei das erste Ende in der Nähe der ersten Fläche (6) angeordnet ist, wobei das Lager dazu bestimmt ist, ein erstes und ein zweites starres Element (10, 11) aufzunehmen, die an der Innenarmierung (2) bzw. der Außenseite (5) befestigt sind und die entlang der Längsachse (Z) entgegengesetzte Kräfte an den Körper übertragen,
**dadurch gekennzeichnet, dass** der Einsatz (4) ein elastisches, ringförmiges Stück bildet, das Schlitze (16) aufweist, die von dem ersten Ende (8) zu dem zweiten Ende (9) verlaufen, wobei die Schlitze wenigstens zwei Zungen (17) bilden, die sich entlang der Außenseite (5) des ringförmigen Körpers zwischen einer Basis (18) und einer Spitze (19) erstrecken, und geeignet sind, elastisch in einer zur Längsachse (Z) gerichteten radialen Richtung derart verformt zu werden, dass die erste Fläche (6) eine kleinere radiale Abmessung aufweist.

2. Schwingungsdämpfendes Lager nach Anspruch 1,
bei dem die Basis (18) der Zungen (17) breiter ist als die Spitze (19) der Zungen.

3. Schwingungsdämpfendes Lager nach Anspruch 1 oder 2,
bei dem die Außenseite (5) des Elastomer-Körpers wenigstens ein Relief (20) aufweist, das radial verläuft und der Länge nach zwischen der ersten Fläche (6) des Körpers und der Basis (18) der Zungen angeordnet ist.

4. Schwingungsdämpfendes Lager nach Anspruch 3,
bei dem das Relief durch einen ersten ringförmigen Rand (20) gebildet ist, der sich radial nach außen erstreckt und an die erste Fläche (6) des Körpers angrenzt.

5. Schwingungsdämpfendes Lager nach Anspruch 4,
bei dem die Spitze (19) der Zungen einen Flügel (21) aufweist, der in dem ersten Rand (20) radial nach außen verläuft.

6. Schwingungsdämpfendes Lager nach einem der Ansprüche 1 bis 5,
bei dem die erste Fläche (6) des Körpers ein Umfangsstück (6a) aufweist, das ein Kegelstumpf mit einer zur Längsachse (Z) kolinearen Achse und einer neben der zweiten Fläche (7) des Körpers angeordneten Basis ist.

7. Schwingungsdämpfendes Lager nach einem der Ansprüche 1 bis 6,
bei dem der zweite ringförmige Rand (22) ausgehend von der Außenseite (5) des Körpers radial nach außen verläuft, wobei der zweite Rand an die zweite Fläche (7) des Körpers angrenzt.

8. Schwingungsdämpfendes Lager nach Anspruch 7,
bei dem der Einsatz (4) einen Ring (24) umfasst, der sich ausgehend von einem im Körper angeordneten Innenrand (24a) bis zu einem im zweiten Rand (22) angeordneten Außenrand (24b) erstreckt.

9. Schwingungsdämpfendes Lager nach Anspruch 8,
bei dem die Basis (18) der Zungen mit dem Innenrand (24a) des Rings fest verbunden ist.

10. Schwingungsdämpfendes Lager nach Anspruch 9,
bei dem die Summe der Längen der Basen (18) der Zungen wenigstens 80 Prozent des Umfangs des Innenrands (24a) des Rings entspricht.

11. Schwingungsdämpfendes Lager nach einem der Ansprüche 8 bis 10, bei dem die Zungen (17) gleichmäßig über den Ring (24) verteilt sind.

12. Schwingungsdämpfendes Lager nach einem der Ansprüche 3 bis 11,
bei dem die Außenseite (5) des Körpers mit Ausnahme eines jeden Reliefs ein Kegelstumpf mit einer zur Längsachse (Z) kolinearen Achse und einer neben der ersten Fläche (6) angeordneten Spitze ist, der einen ersten Durchmesser (D1) und eine Basis aufweist, die einen zweiten Durchmesser (D2) hat, der größer ist als der erste Durchmesser (D1).

13. Schwingungsdämpfendes Lager nach Anspruch 12,
bei dem ein Rückfederteller (26), der einen Außendurchmesser hat, der höchstens dem ersten Durchmesser (D1) des Kegelstumpfs der Außenseite (5) entspricht, an der Seite der ersten Fläche (6) des Körpers koaxial gegen die Innenarmierung (2) derart angebracht ist, dass er eine nach außen gerichtete konkave Fläche aufweist.

14. Schwingungsdämpfendes Lager nach Anspruch 13,
bei dem ein Anschlag (28), der einen maximalen Durchmesser, der kleiner ist als der erste Durchmesser (D1) des Kegelstumpfs der Außenseite (5), und eine Spitze (28a) mit einem Durchmesser, der kleiner ist als der maximale Durchmesser, aufweist, von der konkaven Fläche des Rückfedertellers (26) ausgehend entlang der Längsachse (Z) verläuft.

15. Schwingungsdämpfendes Lager nach einem der Ansprüche 1 bis 14,
bei dem ein Aufprallteller (27) an der Seite der zweiten Fläche (7) des Körpers koaxial gegen die Innenarmierung (2) derart angebracht ist, dass er eine nach außen gerichtete konkave Fläche aufweist.

16. Schwingungsdämpfendes Lager nach einem der Ansprüche 1 bis 15,
bei dem ein zusätzlicher Metalleinsatz (30) ein im Körper (3) angeordnetes Ende (30a), ein erstes, sich der Länge nach durch die zweite Fläche (7) des Körpers hindurch erstreckendes Stück (30b) und ein zweites, radial verlaufendes Stück (30c) aufweist, das eine mit Elastomer versehene Außenseite (31) aufweist.

17. Fahrzeug mit einem schwingungsdämpfenden Lager nach einem der Ansprüche 1 bis 16, einem Dämpfer (35) und einer selbsttragenden Karosserie (11), bei dem der Dämpfer eine Stange (10) umfasst, die ein Ende aufweist, das mit der Innenarmierung (2) des Lagers fest verbunden ist, und die ausgehend von der zweiten Fläche (7) des Elastomer-Körpers entlang der Längsachse (Z) der Armierung verläuft, und bei dem die selbsttragenden Karosserie (11) eine Öffnung aufweist, die eine ringförmige Wand (12) hat, deren Form komplementär zu der Außenseite (5) des Körpers ist, wobei das Lager in die Öffnung der Karosserie eingesetzt ist.

18. Verfahren zur Montage eines Dämpfers (35), der eine Stange (10) mit einem Ende (10a) umfasst, auf einer selbsttragenden Fahrzeugkarosserie (11), die eine Öffnung mit einer sich zwischen einer Innenseite (14) und einer Außenseite (13) der Karosserie erstreckenden, ringförmigen Wand (12) aufweist, mit Hilfe eines schwingungsdämpfenden Lagers nach einem der Ansprüche 1 bis 16, bei dem die ringför*mige Wand (12) der Öffnung eine zur Außenseite (5) des Elastomer-Körpers komplementäre Form aufweist und das die folgenden Schritte umfasst:
- das Ende (10a) der Stange des Dämpfers wird fest an der Innenarmierung (2) des Lagers angebracht, derart, dass die zweite Fläche (7) des Lagers zum Dämpfer hin gerichtet ist;
- die erste Fläche (6) des Lagers wird derart gegen die Innenseite (14) der Öffnung der Karosserie gedrückt, dass die erste Fläche des Körpers in Richtung der Längsachse (Z) zusammengedrückt wird;
- der Elastomer-Körper (3) wird in die Öffnung der Karosserie soweit eingesetzt, bis sich die Außenseite (5) des Elastomer-Körpers vollständig der ringförmigen Wand (12) der Öffnung unter der Einwirkung der elastischen Zungen (17) des Einsatzes (4) anpasst.

## Claims

1. Vibration-isolating support comprising:
an internal strength member (2) extending along a longitudinal axis (Z);
an annular elastomer body (3) that is secured to the internal strength member (2), that surrounds the internal strength member about the longitudinal axis (Z), and that is defined radially, relative to the longitudinal axis (Z), by an annular outside surface (5) and longitudinally by a first end face (6) and by a second end face (7); and
at least one metal insert (4) extending inside said body in the vicinity of said outside surface (5) between a first end (8) and a second end (9), said first end being disposed in the vicinity of the first face (6), said support serving to receive first and second rigid elements (10, 11) fastened respectively to said internal strength member (2) and to said outside surface (5), and that transmit to said body forces in opposite directions along the longitudinal axis (Z), **characterized in that** the insert (4) forms a resilient annular piece which is provided with slots (16) extending from its first end (8) towards its second end (9), said slots defining at least two tongues (17) which extend along the outside surface (5) of the annular body between bases (18) and tops (19), and which are suitable for being deformed elastically in a radial direction extending towards the longitudinal axis (Z) so that the first face (6) becomes radially more compact.

2. Vibration-isolating support according to claim 1, in which the base (18) of each of the tongues (17) is wider than the top (19) of each of said tongues.

3. Vibration-isolating support according to claim 1 or claim 2, in which the outside surface (5) of the elastomer body has at least one portion in relief (20) which extends radially and which is situated longitudinally between the first face (6) of the body and the bases (18) of the tongues.

4. Vibration-isolating support according to claim 3, in which the portion in relief is formed by a first annular lip (20) which extends radially outwards and which is adjacent to the first face (6) of the body.

5. Vibration-isolating support according to claim 4, in which the top (19) of each of the tongues is provided with a flange (21) extending radially outwards inside the first lip (20).

6. Vibration-isolating support according to any one of claims 1 to 5, in which the first face (6) of the body has a peripheral portion (6a) which is a truncated cone of axis coinciding with the longitudinal axis (Z), with a base disposed at the second face (7) of the body.

7. Vibration-isolating support according to any one of claims 1 to 6, in which a second annular lip (22) extends radially outwards from the outside surface (5) of the body, said second lip being adjacent to the second face (7) of the body.

8. Vibration-isolating support according to claim 7, in which the insert (4) is provided with a ring (24) extending radially from an inner edge (24a) disposed inside the body (3) to an outer edge (24b) disposed inside the second lip (22).

9. Vibration-isolating support according to claim 8, in which the base (18) of each of the tongues is integral with the inner edge (24a) of the ring.

10. Vibration-isolating support according to claim 9, in which the sum of the lengths of the bases (18) of the tongues is not less than 80% of the length of the periphery of the inner edge (24a) of the ring.

11. Vibration-isolating support according to any one of claims 8 to 10, in which the tongues (17) are distributed uniformly around the ring (24).

12. Vibration-isolating support according to any one of claims 3 to 11, in which the outside surface (5) of the body is, ignoring any relief, a truncated cone of axis coinciding with the longitudinal axis (Z), with a top disposed at the first face (6), which top has a first diameter (D1), and a base which has a second diameter (D2) greater than the first diameter (D1).

13. Vibration-isolating support according to claim 12, in which a rebound collar (26) having an outside diameter no larger than the first diameter (D1) of the truncated cone of the outside surface (5), is mounted against and in alignment with the internal strength member (2) in the vicinity of the first face (6) of the body so as to have an outwardly-facing concave face.

14. Vibration-isolating support according to claim 13, in which an abutment (28) having a maximum diameter smaller than the first diameter (D1) of the truncated cone of the outside surface (5) and a top (28a) of diameter smaller than said maximum diameter, extends along the longitudinal axis (Z) from the concave face of the rebound collar (26).

15. Vibration-isolating support according to any one of claims 1 to 14, in which a shock collar (27) is mounted against and in alignment with the internal strength member (2) in the vicinity of the second face (7) of the body so as to have an outwardly-facing concave face.

16. Vibration-isolating support according to any one of claims 1 to 15, in which an additional metal insert (30) has one end (30a) disposed inside the body (3), a first portion (30b) extending longitudinally through the second face (7) of said body, and a second portion (30c) extending radially and that has an outside face (31) covered with elastomer.

17. Vehicle including a vibration-isolating support according to any one of claims 1 to 16, a shock absorber (35) and a shell (11), in which vehicle the shock absorber includes a rod (10) which has one end (10a) secured to the internal strength member (2) of said support and which extends along the longitudinal axis (Z) of said strength member from the second face (7) of the elastomer body, and in which the shell (11) is provided with an opening having an annular wall (12) of shape complementary to the outside surface (5) of said body, said support being inserted in said opening in the shell.

18. Method of assembling a shock-absorber (35) including a rod (10) having an end (10a) to a vehicle shell (11) provided with an opening that has an annular wall (12) extending between a bottom face (14) and a top face (13) of said shell, by means of a vibration-isolating support according to any one of claims 1 to 16, in which method said annular wall (12) of the opening has a shape complementary to the outside surface (5) of the elastomer body, and said method comprising the following steps:
the end (10a) of the rod of the shock absorber is fastened to the internal strength member (2) of the support so that the second face (7) of the support faces towards the shock absorber;
the first face (6) of the support is pressed against the bottom edge (14) of the opening in the shell, thereby radially compressing said first face of the body towards the longitudinal axis (Z); and
the elastomer body (3) is inserted into the opening in the shell until the outside surface (5) of the elastomer body fits snugly into the annular wall (12) of the opening under the action of the resilient tongues (17) of the insert (4).
